(19) Europäisches Patentamt

European Patent Office

Office européen des brevets

(11) EP 0 898 358 A2

(12) **EUROPÄISCHE PATENTANMELDUNG**

(43) Veröffentlichungstag:
**24.02.1999 Patentblatt 1999/08**

(51) Int Cl.⁶: **H02M 7/48**

(21) Anmeldenummer: **98810628.2**

(22) Anmeldetag: **06.07.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.08.1997 DE 19736614**

(71) Anmelder: **Asea Brown Boveri AG**
**5401 Baden (CH)**

(72) Erfinder:
• **Dähler, Peter**
 **5236 Remigen (CH)**

• **Gaupp, Osvin**
 **5400 Baden (CH)**
• **Linhofer, Gerhard**
 **5405 Baden-Dättwil (CH)**
• **Ravot, Jean-François**
 **01170 Chevry (FR)**

(74) Vertreter: **Pöpper, Evamaria, Dr. et al**
 **Asea Brown Boveri AG**
 **Immaterialgüterrecht(TEI)**
 **Haselstrasse 16/699 I**
 **5401 Baden (CH)**

(54) **Wechselrichter**

(57) Ein Wechselrichter (15) umfasst eine Mehrzahl von parallel arbeitenden Wechselrichterbrücken (B1,.., B8), deren Ausgangsspannungen über einen Transformator (19) aufsummiert werden, welcher eine der Anzahl der Wechselrichterbrücken (B1,..,B8) entsprechende Anzahl von Primärwicklungen (P1,..,P8) und zugehörigen Sekundärwicklungen (S1,..,S8) aufweist, wobei jede Wechselrichterbrücke (B1,..,B8) jeweils ausgangsseitig an eine Primärwicklung (P1,..,P8) angeschlossen ist, und die Sekundärwicklungen (S1,..,S8) zur Summation der Ausgangsspannungen in Serie geschaltet sind. Der Transformator (19) weist einen Mittelabgriff (23) auf, welcher über eine Erdverbindung (24) geerdet ist.

Bei einem solchen Wechselrichter wird eine Dämpfung bzw. Unterdrückung von über die Erdverbindung (24) fliessenden gleichphasigen bzw. Gleichtakt-Störströmen und den damit verbundenen Störspannungen dadurch erreicht, dass innerhalb des Transformators (19) den Primärwicklungen (P1,..,P8) bzw. den Sekundärwicklungen (S1,..,S8) Tertiärwicklungen (T1,..,T8) zugeordnet sind, und die Tertiärwicklungen mit einem auf die Gleichtakt-Störspannungen abgestimmten Gleichtaktfilter (51) derart zu einer Schaltung verbunden sind, dass die unerwünschten Gleichtakt-Störspannungen bzw.- Störströme unterdrückt werden.

Fig. 9

EP 0 898 358 A2

## Beschreibung

TECHNISCHES GEBIET

Die vorliegende Erfindung bezieht sich auf das Gebiet der Leistungselektronik. Sie betrifft einen Wechselrichter, umfassend eine Mehrzahl von am gleichen Gleichspannungszwischenkreis parallel arbeitenden Wechselrichterbrücken, deren Ausgangsspannungen über einen Transformator aufsummiert werden, welcher eine der Anzahl der Wechselrichterbrücken entsprechende Anzahl von Primärwicklungen und zugehörigen Sekundärwicklungen aufweist, wobei jede Wechselrichterbrücke jeweils ausgangsseitig an eine Primärwicklung angeschlossen ist, und die Sekundärwicklungen zur Summation der Ausgangsspannungen in Serie geschaltet sind, und wobei die Wechselrichterbrücken jeweils nach Massgabe einer Hilfssteuerspannung pulsdauermoduliert angesteuert werden und die Hilfssteuerspannungen der einzelnen Wechselrichterbrücken untereinander eine konstante Phasendifferenz aufweisen, und wobei der Transformator einen Mittelabgriff aufweist, welcher über eine Erdverbindung geerdet ist.

STAND DER TECHNIK

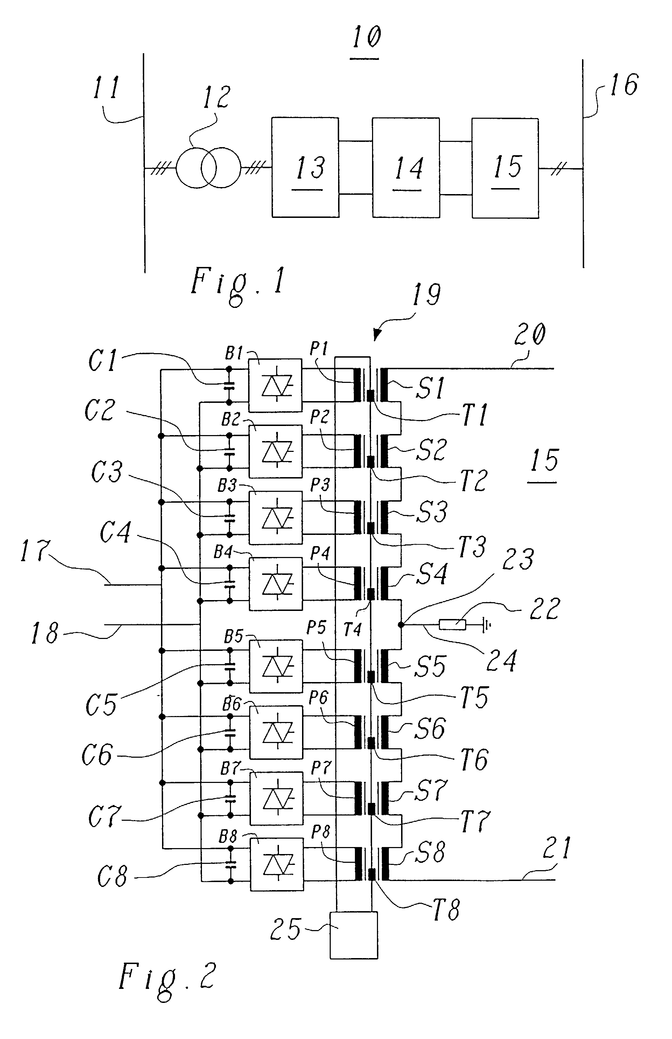

Zur Verbindung von Stromnetzen mit unterschiedlicher Phasenzahl und/oder Wechselspannungsfrequenz, wie z.B. zwischen einem 50Hz-Drehstromnetz und einem einphasigen 16 2/3Hz-Bahnnetz, werden zunehmend mit Leistungshalbleitern ausgerüstete vollstatische Kupplungen bzw. Bahnstromumrichter eingesetzt, die häufig als Umrichter mit Gleichspannungszwischenkreis ausgebildet sind. Gemäss Fig. 1 umfasst ein solcher Bahnstromumrichter 10 beispielsweise einen (thyristorbestückten) Stromrichter 13, der über einen Transformator 12 den Drehstrom aus dem Drehstromnetz 11 abnimmt und in einen Gleichstrom umwandelt, einen Gleichspannungszwischenkreis 14 zur Glättung bzw. Zwischenspeicherung, und einen Wechselrichter 15, der den Gleichstrom wieder in einen Wechselstrom der gewünschten Frequenz umwandelt und in das Bahnnetz 16 einspeist.

Im Wechselrichter 15 werden üblicherweise eine oder mehrere parallel arbeitende Wechselrichterbrücken mit schaltbaren Ventilen (z.B. GTOs) eingesetzt, die pulsdauermoduliert angesteuert werden und die gewünschte sinusförmige Ausgangsspannung durch eine Abfolge von dauermodulierten Rechteckimpulsen wechselnder Polarität approximieren. Zur Pulsdauermodulation wird dabei üblicherweise eine dreieckförmige Hilfssteuerspannung verwendet. Einzelheiten der Ansteuerung können beispielsweise einem Sonderdruck (Nr. 9608-1000-0) der Anmelderin, "Vollstatische 100-MW-Frequenzkupplung Bremen", entnommen werden. Werden mehrere Wechselrichterbrücken parallel betrieben, werden die Ausgangsspannungen aufsummiert. Eine Verringerung des Oberschwingungsgehalts wird dabei dadurch erreicht, dass die Ansteuerung der einzelnen Wechselrichterbrücken über die Hilfssteuerspannungen phasenverschoben erfolgt.

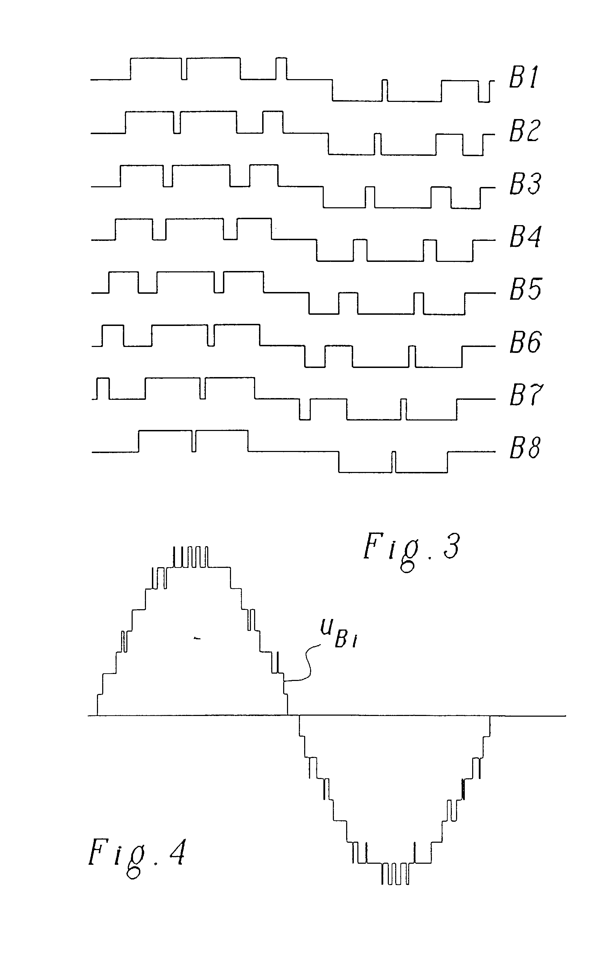

Ein beispielhafter Aufbau eines Wechselrichters 15 ist in Fig. 2 wiedergegeben. Der Wechselrichter 15 dieses Beispiels umfasst 8 parallel arbeitende Wechselrichterbrücken B1,..,B8, die jeweils mit einem parallelen Kondensator C1,..,C8 am Eingang an die vom Gleichspannungszwischenkreis 14 kommenden Eingangsleitungen 17, 18 angeschlossen sind. Zur Summation der Ausgangsspannungen der Wechselrichterbrücken B1,..,B8 ist ein Transformator 19 vorgesehen, der für jede der Wechselrichterbrücken B1,..,B8 ein Wicklungspaar aus einer Primärwicklung P1,..,P8 und einer Sekundärwicklung S1,..,S8 enthält. Die Ausgänge der Wechselrichterbrücken B1,..,B8 sind jeweils an die entsprechenden Primärwicklungen P1,..,P8 angeschlossen, die Sekundärwicklungen S1,..,S8 sind in Reihe geschaltet. Das summierte Ausgangssignal steht an den Ausgangsleitungen 20, 21 zur Verfügung. Zur Unterdrückung von Oberschwingungen kann der Transformator 19 zusätzlich mit Tertiärwicklungen T1,..,T8 ausgestattet sein, die in Reihe geschaltet und durch eine entsprechende Filterschaltung 25 bedämpft sind (siehe dazu beispielsweise die EP-B1-0 149 169). Beispielhafte -dauermodulierte und phasenverschobene Impulsreihen für die Wechselrichterbrücken B1,..,B8 sind in Fig. 3 wiedergegeben. Durch Summation der einzelnen Impulsfolgen im Transformator 19 ergibt sich daraus die resultierende Summenspannung $u_{Bi}$ in Fig. 4.

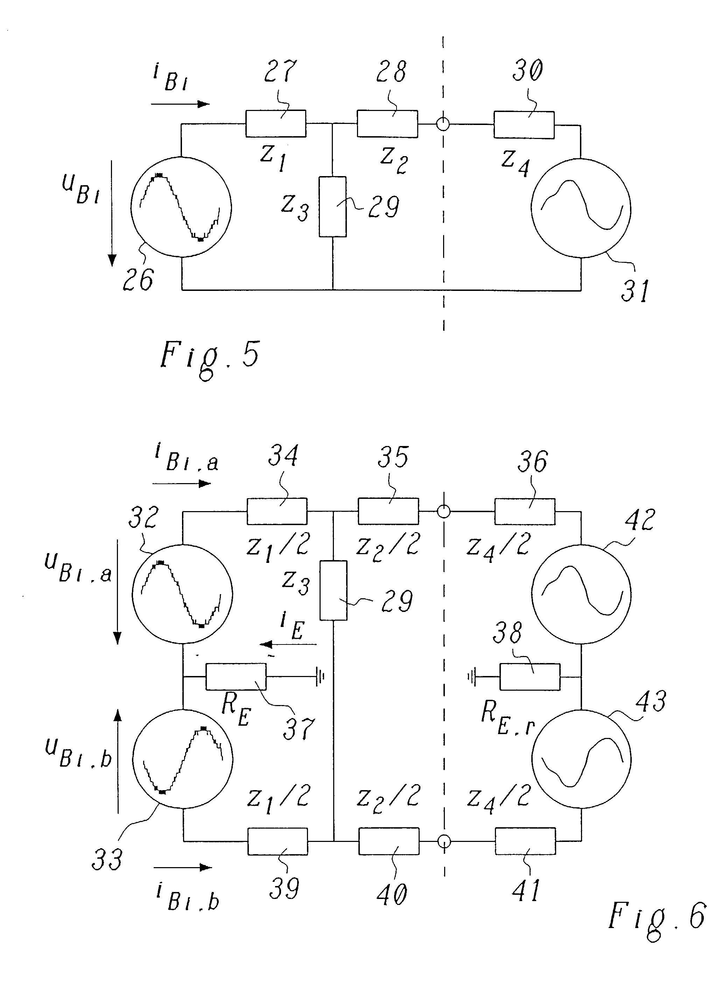

Probleme mit der in Fig. 2 dargestellten Art von Wechselrichter ergeben sich nun, wenn - wie es bei manchen Bahnnetzen erforderlich ist - der Transformator 19 des Wechselrichters 15 an einem Mittelabgriff 23 durch eine Erdverbindung 24 über einen Widerstand 22 (oder auch ohne Widerstand, d.h. "hart") geerdet wird (siehe Fig. 2). Diese Probleme lassen sich anhand der in Fig. 5 bis 8 wiedergegebenen Ersatzschaltbilder verdeutlichen: Der Wechselrichter, der als Spannungsquellenumrichter (Voltage Source Converter, VSC) arbeitet, kann grundsätzlich (Fig. 5) durch eine Spannungsquelle 26 mit der Spannung $u_{Bi}$ beschrieben werden, die einen entsprechenden Strom $u_{Bi}$ durch einen Kreis treibt, der durch die Impedanzen 27, 28 und 29 gebildet wird. Die Impedanzen 27 und 28 mit den Werten $z_1$ bzw. $z_2$ repräsentieren den Transformator 19, die Impedanz 29 mit dem Wert $z_3$ repräsentiert die Filterschaltung 25. Das Bahnnetz 16 lässt sich im Ersatzschaltbild durch die Impedanz 30 ($z4$) und die Spannungsquelle 31 beschreiben.

Durch die Erdung (über den Widerstand 22) am Mittelabgriff 23 des Transformators 19 kann das Ersatzschaltbild des VSC aus Fig. 5 in ein Ersatzschaltbild gemäss Fig. 6 überführt werden. Die Spannungsquelle 26 ist hier in zwei Spannungsquellen 32 und 33 mit den Teilspannungen $U_{Bi,a}$ und $u_{Bi,b}$ aufgeteilt, wobei gilt:

$$(1) \qquad U_{Bi} = U_{Bi,a} - U_{Bi,b}$$

$$(5)\ i_E = 2 * i_{Bi,CM} \cdot$$

Die Impedanzen 27 und 28 des Transformators 19 sind in Fig. 6 nun aufgeteilt in Impedanzen 34 und 39 bzw. 35 und 40 mit jeweils der Hälfte des ursprünglichen Impedanzwertes, nämlich $z_1/2$ und $z_2/2$. Die Impedanz 29 mit dem Wert z3 bleibt erhalten, während die Impedanz 30 und die Spannungsquelle 31 des Bahnnetzes 16 ebenfalls aufgeteilt werden in die Impedanzen 36 und 41 (jeweils mit dem Wert $z_4/2$) bzw. Spannungsquellen 42 und 43. Die Erdung über den Mittelabgriff 23 des Transformators 19 wird in Fig. 6 durch den Widerstand 37 mit dem Wert $R_E$ repräsentiert. Ein entsprechender widerstand 38 mit dem Wert $R_{E,r}$ beschreibt den gesamten Fern-Erdungswiderstand des Bahnnetzes 16.

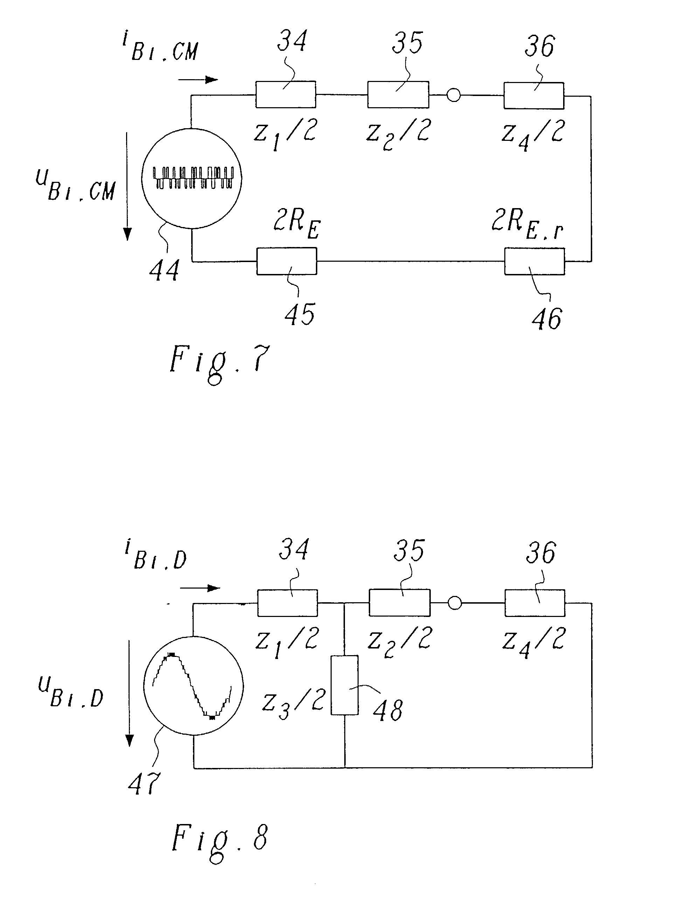

Nach dem Konzept der modalen Zerlegung ("Modal Decomposition") kann das Ersatzschaltbild der Fig. 6 in zwei überlagerte Teilsysteme zerlegt werden, nämlich in das Gleichtakt-System ("Common Mode System") und das Gegentakt-System ("Differential Mode System"). Die beiden überlagerten Systeme können dann getrennt voneinander behandelt und die resultierenden Ströme und Spannungen nach Beendigung der Analyse einfach addiert werden, um die realen physikalischen Grössen zu erhalten. Das Ersatzschaltbild im Gleichtakt-System für die obere Hälfte des VSC ist in Fig. 7 wiedergegeben. Neben den bereits bekannten Impedanzen 34, 35 und 36 befinden sich im Stromkreis die Widerstände 45 und 46, welche jeweils das Doppelte der Erdungswiderstände 37 bzw. 38 ausmachen. Die Spannungsquelle 44 gibt eine Spannung $u_{Bi,cM}$ ab, die einen Strom $i_{Bi,CM}$ durch den Kreis treibt. Das Ersatzschaltbild im Gegentakt-System für die obere Hälfte des VSC ist in Fig. 8 dargestellt. Neben den bereits bekannten Impedanzen 34, 35 und 36 ist hier zusätzlich die Impedanz 48 vorhanden, welche der halben Impedanz 29 entspricht und für die Filterschaltung 25 charakteristisch ist. Die Spannungsquelle 47 gibt eine Span' nung $u_{Bi,D}$ ab, die einen Strom $i_{Bi,D}$, durch den Kreis treibt.

Für die Spannungen und Ströme ergibt sich der folgende Zusammenhang:

$$(2) \qquad U_{Bi,a} = U_{Bi,CM} + U_{Bi,D}$$

$$(3)\ U_{Bi,b} = U_{Bi,CM} - U_{Bi,D'}$$

sowie

$$(4)\ u_{Bi} = i_{Bi,CM} + i_{Bi,D}$$

und

Aus den Fig. 5 bis 8 und den Gleichungen (1) bis (5) ergibt sich unmittelbar, dass die Gleichtaktspannung $u_{Bi,CM}$ unerwünscht ist, weil sie einen Gleichtaktstrom $i_{Bi,CM}$ treibt, der nur durch die Erdungswiderstände 37 und 38 zurückfliessen kann. Die Höhe des Gleichtaktstromes $i_{Bi,CM}$ ist hauptsächlich durch die Impedanzen $z_1$ und $z_2$ des Transformators 19 begrenzt. Der Gleichtaktstrom $i_{Bi,CM}$ hat zwei nachteilige Wirkungen:

- Er bewirkt erhebliche Verluste sowohl im lokalen Erdungswiderstand 22 bzw. 37 als auch im Fern-Erdungswiderstand 38. Wie Simulationen einer realen Anlage (ca. 50MW) zeigen, können die Verluste im Erdungswiderstand 22 (bei einem nominalen Widerstandswert von $R_E = 334\ \Omega$) ungefähr 50kW betragen und sind daher von einer unakzeptablen Grössenordnung.

- Er kann in dem Bahnnetz (z.B. einem 138kV-Netz) Störungen in benachbarten Kommunikationseinrichtungen hervorrufen.

DARSTELLUNG DER ERFINDUNG

Es ist daher Aufgabe der Erfindung, einen VSC-Wechselrichter zu schaffen, bei welchem die über die Erdverbindung fliessenden Ströme unterdrückt bzw. auf einen unschädlichen Wert gedämpft werden.

Die Aufgabe wird bei einem Wechselrichter der eingangs genannten Art dadurch gelöst, dass zur Dämpfung bzw. Unterdrückung von über die Erdverbindung fliessenden gleichpha-sigen bzw. Gleichtakt-Störströmen und den damit verbundenen Störspannungen innerhalb des Transformators den Primärwicklungen bzw. den Sekundärwicklungen Tertiärwicklungen zugeordnet sind, und die Tertiärwicklungen derart zu einer Schaltung verbunden sind, dass die unerwünschten Gleichtakt-Störspannungen bzw.-Störströme vom Netz und von der Erdverbindung ferngehalten werden.

Eine erste bevorzugte Ausführungsform der Erfindung zeichnet sich dadurch aus, dass jedem Paar aus Primär- und Sekundärwicklung jeweils eine Tertiärwicklung zugeordnet ist, dass die Tertiärwicklungen oberhalb des Mittelabgriffs und die Tertiärwicklungen unterhalb des Mittelabgriffs jeweils in Reihe geschaltet sind, dass die einander entsprechenden Ausgänge der beiden Reihenschaltungen jeweils untereinander in Verbindung stehen, dass die einen einander entsprechenden Ausgänge der beiden Reihenschaltungen untereinander direkt verbunden sind, dass ein Gleichtaktfilter zwischen den anderen einander entsprechenden Ausgängen der beiden Reihenschaltungen angeordnet ist, und dass das Gleichtaktfilter als Hochpassfilter 2.Ordnung ausgebildet ist. Hierdurch können mit relativ geringem zusätzlichen Schaltungsaufwand gezielt die Gleichtakt-Störspannungen bis zu den höheren Harmonischen sicher bedämpft werden.

Die Tertiärwicklungert lassen sich gleichzeitig auch in herkömmlicher Weise zur AC-Filterung verwenden, wenn gemäss einer bevorzugten Weiterbildung der Ausführungsform jeder der Reihenschaltungen der Tertiärwicklungen ein AC-Filter parallel geschaltet ist.

Weitere Ausführungsformen ergeben sich aus den abhängigen Ansprüchen.

Bevorzugt wird ein Wechselrichter nach der Erfindung in einem Umrichter mit Gleichspannungszwischenkreis, insbesondere in einem Bahnstromumrichter oder einer Frequenzkupplung, eingesetzt.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    den prinzipiellen Aufbau eines Bahnstromumrichters;

Fig. 2    das Blockschaltbild eines für den Bahnstromumrichter nach Fig. 1 geeigneten Wechselrichters mit einer Mehrzahl von parallelen Wechselrichterbrücken und mit Mittelpunktserdung des Transformators;

Fig. 3    beispielhafte pulsdauermodulierte Ausgangsimpulsfolgen der einzelnen Wechselrichterbrücken aus Fig. 2;

Fig. 4    die sich durch Aufsummierung der Ausgangsimpulsfolgen aus Fig. 3 ergebende Summenspannung;

Fig. 5    das Ersatzschaltbild des mit dem Bahnnetz verbundenen Wechselrichters aus Fig. 4 ohne Mittelpunktserdung des Transformators;

Fig. 6    das zu Fig. 5 entsprechende Ersatzschaltbild bei vorhandener Mittelpunktserdung;

Fig. 7    das aus dem Ersatzschaltbild der Fig. 6 abgeleitete Ersatzschaltbild für das Gleichtakt-Teilsystem;

Fig. 8    das aus dem Ersatzschaltbild der Fig. 6 abgeleitete Ersatzschaltbild für das Gegentakt-Teilsystem;

Fig. 9    ein bevorzugtes Ausführungsbeispiel für einen Wechselrichter nach der Erfindung mit Tertiärwicklungen im Transformator, die zu zwei Reihenschaltungen zusammengefasst und mit einem Gegentaktfilter und zwei AC-Filtern verbunden sind; und

Fig. 10    das Ersatzschaltbild eines Hochpassfilters 2.Ordnung, wie es bevorzugt als Gleichtaktfilter und AC-Filter in der Schaltung nach Fig. 9 eingesetzt wird.

WEGE ZUR AUSFÜHRUNG DER ERFINDUNG

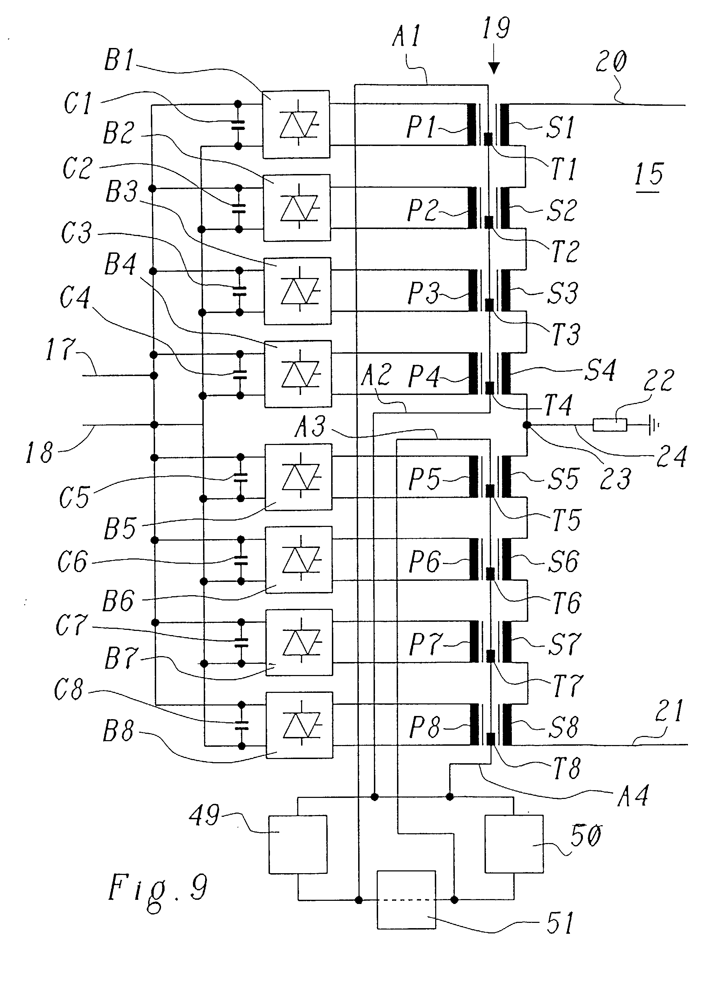

In der Fig. 9 ist ein bevorzugtes Ausführungsbeispiel für einen Wechselrichter nach der Erfindung wiedergegeben. Der Wechselrichter der Fig. 9 gleicht in seinem Aufbau in weiten Teilen dem Wechselrichter der Fig. 2. Auch hier ist beim Transformator 19 für jedes Paar von Primär- und Sekundärwicklung P1, S1;...; P8, S8 eine Tertiärwicklung T1,..,T8 vorgesehen. Um die Gleichtakt-Spannungen unterdrücken zu können, sind die Tertiärwicklungen T1,..,T8 in einer speziellen Weise mit einem Gleichtaktfilter 51 zusammengeschaltet.

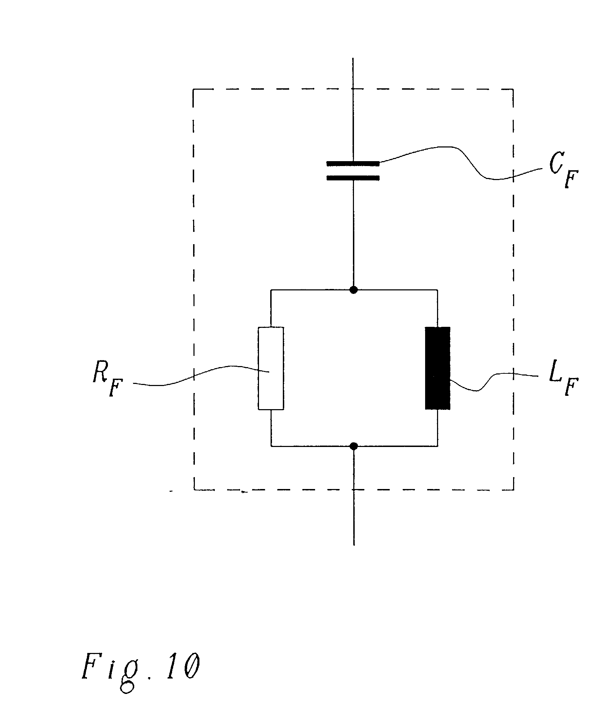

Dazu sind die Tertiärwicklungen T1,..,T4 oberhalb des Mittelabgriffs 23 und die Tertiärwicklungen T5,..,T8 unterhalb des Mittelabgriffs 23 jeweils in Reihe geschaltet und bilden eine erste und zweite Reihenschaltung mit einander entsprechenden Ausgängen A1, A3 und A2, A4. Die zweiten einander entsprechenden Ausgänge A2, A4 der beiden Reihenschaltungen sind direkt miteinander verbunden. Das Gleichtaktfilter 51 ist dagegen zwischen den ersten einander entsprechenden Ausgängen A1, A3 der beiden Reihenschaltungen angeordnet. Das Gleichtaktfilter 51 ist vorzugsweise als Hochpassfilter 2.Ordnung ausgebildet. Sein Ersatzschaltbild ist in Fig. 10 wiedergegeben und umfasst eine Filterkapazität $C_F$, einen Filterwiderstand $R_F$, und eine Filterinduktivität $L_F$. Das Gleichtaktfilter ist so ausgelegt, dass die störenden Gleichtaktkomponenten mit ihren Harmonischen bedämpft werden.

Neben der neuen Aufgabe der Unterdrückung bzw. Dämpfung von Gleichtaktkomponenten stehen die Tertiärwicklungen auch weiterhin zur herkömmlichen AC-Filterung zur Verfügung. Dazu wird die Filterschaltung 25 gemäss Fig. 2 in zwei AC-Filter 49 und 50 aufgeteilt, die jeweils einer der Reihenschaltungen aus den Tertiärwicklungen T1,..,T8 parallel geschaltet sind. Die AC-Filter sind ebenfalls als Hochpassfilter 2.Ordnung ausgebildet und weisen vorzugsweise dieselbe Filtertopologie (Ersatzschaltbild gemäss Fig. 10) auf wie das Gleichtaktfilter 51.

Es ist im Rahmen der Erfindung aber auch denkbar, das Gleichtaktfilter 51 ganz wegzulassen, und die Ausgänge Al und A3 der beiden Reihenschaltungen aus den Tertiärwicklungen T1,..,T4 bzw. T5,..,T8 direkt über die in Fig. 9 gestrichelt eingezeichnete Verbindung zu verbinden bzw. das Gleichtaktfilter 51 kurzzuschliessen. Hierdurch lässt sich eine Vereinfachung der Schaltung erreichen. Der Wechselrichter wird jedoch in manchen Fällen mit höheren Ströme belastet.

Die Erfindung ist in Fig. 9 im Zusammenhang mit einem 1-phasigen Transformator erläutert worden.

Es versteht sich jedoch von selbst, dass sie entsprechend auf einen 3-phasigen Transformator anwendbar ist.

BEZEICHNUNGSLISTE

| 10 | Bahnstromumrichter |
|---|---|
| 11 | Drehstromnetz |
| 12 | Transformator (3-phasig) |
| 13 | Stromrichter |
| 14 | Gleichspannungszwischenkreis |
| 15 | Wechselrichter |
| 16 | Bahnnetz |
| 17,18 | Eingangsleitung (Wechselrichter) |
| 19 | Transformator (Wechselrichter) |
| 20,21 | Ausgangsleitung (Wechselrichter) |
| 22 | Widerstand |
| 23 | Mittelabgriff (Transformator) |
| 24 | Erdverbindung |
| 25 | Filterschaltung |
| 26,31 | Spannungsquelle |
| 27,..,30 | Impedanz |
| 32, 33 | Spannungsquelle |
| 34,..,36 | Impedanz |
| 37,38 | Widerstand |
| 39,..,41 | Impedanz |
| 42, 43 | Spannungsquellen |
| 44,47 | Spannungsquelle |
| 45, 46 | Widerstand |
| 48 | Impedanz |
| 49,50 | AC-Filter |
| 51 | Gleichtaktfilter |
| B1,..,B8 | Wechselrichterbrücke |
| C1,..,C8 | Kondensator |
| P1,..,P8 | Primärwicklung |
| S1,..,S8 | Sekundärwicklung |
| T1,..,T8 | Tertiärwicklung |

**Patentansprüche**

1. Wechselrichter (15), umfassend eine Mehrzahl von am gleichen Gleichspannungszwischenkreis (14) parallel arbeitenden Wechselrichterbrücken (B1,.., B8), deren Ausgangsspannungen über einen Transformator (19) aufsummiert werden, welcher eine der Anzahl der Wechselrichterbrücken (B1,.., B8) entsprechende Anzahl von Primärwicklungen (P1,..,P8) und zugehörigen Sekundärwicklungen (S1,..,S8) aufweist, wobei jede Wechselrichterbrücke (B1,..,B8) jeweils ausgangsseitig an eine Primärwicklung (P1,..,P8) angeschlossen ist, und die Sekundärwicklungen (S1,..,S8) zur Summation der Ausgangsspannungen in Serie geschaltet sind, und wobei die Wechselrichterbrücken (B1,..,B8) jeweils nach Massgabe einer Hilfssteuerspannung pulsdauermoduliert angesteuert werden und die Hilfssteuerspannungen der einzelnen Wechselrichterbrücken (B1,..,B8) untereinander eine konstante Phasendifferenz aufweisen, und wobei der Transformator (19) einen Mittelabgriff (23) aufweist, welcher über eine Erdverbindung (24) geerdet ist, dadurch gekennzeichnet, dass zur Dämpfung bzw. Unterdrückung von über die Erdverbindung (24) fliessenden gleichphasigen bzw. Gleichtakt-Störströmen und den damit verbundenen Störspannungen innerhalb des Transformators (19) den Primärwicklungen (P1,..,P8) bzw. den Sekundärwicklungen (S1,..,S8) Tertiärwicklungen (T1,..,T8) zugeordnet sind, und die Tertiärwicklungen (T1,..,T8) derart zu einer Schaltung verbunden sind, dass die unerwünschten Gleichtakt-Störspannungen bzw.-Störströme vom Netz und von der Erdverbindung (24) ferngehalten werden.

2. Wechselrichter nach Anspruch 1, dadurch gekennzeichnet, dass jedem Paar (P1, S1;...;P8, S8) aus Primär- und Sekundärwicklung jeweils eine Tertiärwicklung (T1,..,T8) zugeordnet ist, dass die Tertiärwicklungen (T1,..,T4) oberhalb des Mittelabgriffs (23) und die Tertiärwicklungen (T5,..,T8) unterhalb des Mittelabgriffs (23) jeweils in Reihe geschaltet sind, dass die einander entsprechenden Ausgänge (A2, A4 bzw. Al, A3) der beiden Reihenschaltungen jeweils untereinander in Verbindung stehen.

3. Wechselrichter nach Anspruch 2, dadurch gekennzeichnet, dass die einander entsprechenden Ausgänge (A2, A4 bzw. A1, A3) der beiden Reihenschaltungen jeweils untereinander direkt verbunden sind.

4. Wechselrichter nach Anspruch 2, dadurch gekennzeichnet, dass die einen einander entsprechenden Ausgänge (A2, A4) der beiden Reihenschaltungen untereinander direkt verbunden sind, und dass ein Gleichtaktfilter (51) zwischen den anderen einander entsprechenden Ausgängen (Al, A3) der beiden Reihenschaltungen angeordnet ist.

5. Wechselrichter nach Anspruch 4, dadurch gekennzeichnet, dass das Gleichtaktfilter (51) als Hochpassfilter 2.Ordnung ausgebildet ist.

6. Wechselrichter nach einem der Ansprüche 2 bis 5, dadurch gekennzeichnet, dass jeder der Reihenschaltungen der Tertiärwicklungen (T1,..,T4 bzw. T5,..,T8) jeweils ein AC-Filter (49 bzw. 50) parallel geschaltet ist.

7. Wechselrichter nach Anspruch 6, dadurch gekennzeichnet, dass die AC-Filter (49, 50) als Hochpassfilter 2.Ordnung ausgebildet sind.

8. Wechselrichter nach Anspruch 7, dadurch gekennzeichnet, dass das Gleichtaktfilter (51) und die AC-Filter (49, 50) dieselbe Filtertopologie aufweisen.

9. Anwendung eines Wechselrichters nach einem der Ansprüche 1 bis 8 in einem Umrichter (10) mit Gleichspannungszwischenkreis (14).

Fig.1

Fig.2

7

B1

B2

B3

B4

B5

B6

B7

B8

*Fig.3*

$u_{Bi}$

*Fig.4*

Fig. 5

Fig. 6

Fig. 7

Fig. 8

Fig. 9

$C_F$

$R_F$

$L_F$

$Fig. 10$